# EUROPÄISCHE PATENTSCHRIFT

(11) **EP 3 248 459 B1**
(45) Veröffentlichungstag und Bekanntmachung des Hinweises auf die Patenterteilung: **10.07.2019**
(21) Anmeldenummer: 17172458.6
(22) Anmeldetag: 23.05.2017
(51) Int. Cl.: A01K 1/00, A01K 31/22

(54) **VORRICHTUNG ZUM HALTEN VON TIEREN**
DEVICE FOR KEEPING ANIMALS
DISPOSITIF D'ÉLEVAGE POUR BÉTAILS

(30) Priorität: 25.05.2016 DE 202016102784 U
(43) Veröffentlichungstag der Anmeldung: 29.11.2017
(73) Patentinhaber: Honerkamp's Bauernmarkt KG, 49328 Melle-Westhoyel (DE)
(72) Erfinder: Honerkamp, Klaus, 49328 Melle-Westhoyel (DE)
(74) Vertreter: Jabbusch, Matthias

(56) Entgegenhaltungen:
- CN-A- 105 359 985
- US-A- 1 374 120
- US-A- 2 474 932
- US-A- 2 608 178

## Beschreibung

Die Erfindung betrifft eine Vorrichtung zum Halten von Tieren, insbesondere einen Tierstall zur Haltung von Geflügel, aufweisend einen Tragrahmen und wenigstens einen auf dem Tragrahmen aufbauenden Tierhaltebereich.

Auf Freilandflächen gehaltene Tiere, insbesondere Geflügel, nutzen diese Freilandflächen zumeist nicht auf der gesamten zur Verfügung stehenden Freilandfläche gleichermaßen intensiv, so dass es punktuell zu zum Teil hohen Bodenbelastungen der Freilandflächen durch unter anderem Kot kommen kann. Um hohe Bodenbelastungen bei der Freilandhaltung von Tieren, insbesondere Geflügel, zu verringern werden daher häufig mobile Vorrichtungen als Tierstall eingesetzt, die auf der Freilandfläche versetzbar, verschiebbar oder rollbar sind. Durch versetzen dieser Vorrichtungen auf der Freilandfläche kann dann eine gleichmäßigere Nutzung der Freilandflächen erreicht werden.

Eine solche mobile Vorrichtung geht beispielsweise aus der DE 202 15 638 U1 hervor, die einen Geflügelstall zeigt, der auf Kufen montiert ist und einen volierenartigen Auslauf umfasst. Der volierenartige Auslauf stellt dabei die Freilandfläche für die in dem Geflügelstall gehaltene Tiere dar. Aus der EP 2 979 541 A1 ist eine weitere derartige Vorrichtung bekannt, bei der die Kufen als Kettenlaufwerke ausgebildet sind. Die Kettenlaufwerke sollen jeweils einen Tragrahmen mit einer geschlossenen Schlaufe bildende und über wenigstens eine Antriebsstation und eine Spannstation geführte Kette mit einer Vielzahl von gelenkig miteinander verbundenen Kettengliedern aufweisen, an denen Stollen quer zu den Tragrahmen angebracht sind. Sowohl der DE 202 15 638 U1 als auch der EP 2 979 541 A1 ist dabei gemein, dass diese in ihrer Größe gewissen Beschränkungen unterliegen, um auf den Kufen beziehungsweise Kettenlaufwerken versetzbar zu sein. Die Beschränkungen der Größe und damit der Tierbestände je Vorrichtung der DE 2021563821 und der EP 2979 541 A1 bedingen so auch eine geringere Wirtschaftlichkeit, welche beispielsweise mit größeren Tierbeständen je Vorrichtung erreichbar wäre. Das Versetzen der Vorrichtung auf Kufen beziehungsweise Kettenlaufwerken führt zudem häufig zu starken Verwindungen der Vorrichtungen, so dass diese beim Versetzen zum Teil stark beansprucht werden, insbesondere bei unebenem Untergrund.

Andere Tier- und Geflügelställe sind mittels eines Rad-Schiene-Systems versetzbar, wodurch auch größere Tierbestände in einem Tierstall möglich sind. So geht aus der US 2 44 932 A ein Geflügelstall mit Freilauffläche hervor, wobei der Geflügelstall ein Fahrwerk mit Rädern aufweist. Diese Räder laufen in am Boden verlegten Schienen, so dass der Geflügelstall entlang der Schienen verschiebbar ist. Die US 1 374 120 A zeigt einen Geflügelstall mit Freilaufgehege. Dieser Geflügelstall setzt sich aus dem eigentlichen Stallgebäude und dem Freilaufgehege zusammen, wobei das Freilaufgehege durch einen auf Schienen gelagerten Käfig gebildet ist. Dieser Käfig ist auf den Schienen verfahrbar, um das Freilaufgehege auf verschiedene Weideflächen verschieben zu können und in dem Geflügelstall gehaltenen Tieren immer frische Weideflächen bereitstellen zu können. Zwischen Stallgebäude und Käfig ist ein Käfiggang anordbar, durch den die Tiere vom Stallgebäude zum Freilaufgehege gelangen können.

Der CN 105359985 A ist ein Tierstall zu entnehmen, der selbstständig angetrieben ortsbewegbar sein soll. Dazu soll dem Tierstall ein Fahrwerk zugeordnet sein, welches durch ein Raupenlaufwerk, Räder oder ein Rad-Schiene-System gebildet sein kann. Bei vorsehen des Rad-Schiene-Systems werden die an dem Tierstall befestigten Räder dann auf den Schienen verfahren, wobei die Schienen auf einem Untergrund, insbesondere einer Weideflächen, verlegt sind. Des Weiteren soll dieser Tierstall ein hydraulisches System zum Anheben dieses umfassen.

Aufgabe der Erfindung ist es, eine Vorrichtung zum Halten von Tieren bereitzustellen, die hinsichtlich Topographie und Untergrund geländeunabhängig errichtet werden kann und gleichzeitig auch eine geringere Beanspruchung der Vorrichtung beim Versetzen von einer Weidefläche zur nächsten Weidefläche gewährleistet.

Die Lösung dieser Aufgabe erfolgt mit einer Vorrichtung mit den Merkmalen des Patentanspruchs 1. Weiterbildungen und vorteilhafte Ausgestaltungen sind in den nachgeordneten Patentansprüchen angegeben.

Die Vorrichtung zum Halten von Tieren, insbesondere der Tierstall zur Haltung von Geflügel, aufweisend einen Tragrahmen und wenigstens einen auf dem Tragrahmen aufbauenden Tierhaltebereich, zeichnet sich erfindungsgemäß dadurch aus, dass an der von dem Tierhaltebereich abgewandten Seite des Tragrahmens Schienen einer Schienenführung ausgebildet sind, dass jeder Schiene ortsfeste Führungskörper der Schienenführung zugeordnet sind, auf denen die Schienen beweglich gelagert aufliegen, und dass die einer Schiene zugeordneten, ortsfesten Führungskörper in Längserstreckung der jeweiligen Schiene fluchtend hintereinander in vorbestimmten Abständen zueinander auf einem Untergrund, auf dem die Vorrichtung zu errichten ist, angeordnet sind, wobei die Führungskörper eine Auflageebene für den Tragrahmen ausbilden. Der auf der Schienenführung aufliegende Tragrahmen mit dem Tierhaltebereich kann so auf einfache Weise auf den Führungskörpern verschoben werden, so dass den in der Vorrichtung gehaltenen Tieren abwechselnd neue Weideflächen zur Verfügung gestellt werden können und die Bodenbelastung durch beispielsweise Kot auf den genutzten Weideflächen verringert ist. Durch die mit den Führungskörpern ausgebildete Auflageebene, insbesondere ausnivellierte Auflageebene, ist zudem gewährleistet, dass der Tragrahmen mit dem Tierhaltebereich auch auf unebenem Untergrund sicher positionierbar und verwindungsfrei bewegbar ist. Die Errichtung der Vorrichtung ist damit aufgrund der auf gleicher Höhe exakt ausgerichteten Führungskörper geländeunabhängig hinsichtlich Topographie und Untergrund.

Die jeweils einer Schiene zugeordneten endseitigen Führungskörper weisen in weiterer Ausgestaltung einen Abstand zueinander auf, der größer ist als die Länge der Schiene. Durch den Abstand der einer Schiene zugeordneten endseitigen Führungskörper zueinander ist dabei ein maximaler Verschiebeweg des Tragrahmens der Vorrichtung definiert. Der Abstand zwischen den endseitigen Führungskörper kann je nach zur Verfügung stehendem Raum für die Vorrichtung ein Vielfaches der Länge der Schienen betragen oder auch weniger als die doppelte Schienenlänge. In einer bevorzugten Ausgestaltung beträgt der Abstand zwischen den endseitigen Führungskörpern genau das Doppelte der Schienenlänge, um den Tragrahmen mit dem Tierhaltebereich zwischen zwei benachbarten Weideflächen verschieben zu können.

In weiterer Ausgestaltung sind die fluchtend hintereinander angeordneten Führungskörper einer Vorrichtung parallel nebeneinander angeordnet. Insbesondere können die den jeweiligen Schienen zugeordneten, fluchtend hintereinander angeordneten Führungskörper einer Vorrichtung jeweils gleiche Abstände der jeweils endseitigen Führungskörper sowie gleiche Abstände benachbarter Führungskörper zueinander aufweisen.

Um ein möglichst einfaches Verschieben des Tragrahmens mit dem Tierhaltebereich auf den Führungskörpern zu erreichen, kann nach einer Weiterbildung der Erfindung vorgesehen sein, dass die Schienen auf Führungsrollen der Führungskörper gelagert sind. Die Führungskörper können dabei bevorzugt aus Beton gefertigt sein. Die Führungsrollen sind dann vorteilhafterweise in die Führungskörper einbetoniert, insbesondere mit einer die Führungsrolle aufnehmenden Rollenhalterung in die Führungskörper einbetoniert.

An den Schienen und den Führungsrollen sind in weiterer Ausgestaltung Nut und Feder ausgebildet, die eine sichere Führung der Schienenführung und damit eine sichere Spurhaltung gewährleisten. Insbesondere weisen die Führungsrollen eine Nut und die Schienen eine Feder auf. Bevorzugtes Material für die Führungsrollen ist ein witterungsbeständiges Metall oder ein witterungsbeständiger Kunststoff.

Weiterhin können die Führungsrollen wenigstens abschnittsweise in die Führungskörper eingelassen sein, insbesondere in Ausnehmungen der Führungskörper eingelassen sein, so dass diese lediglich mit einem Auflageabschnitt gegenüber den restlichen Führungskörpern hervorstehen und weitestgehend gegen Beschädigungen von außen geschützt sind. In den Ausnehmungen sind die Führungsrollen dann in weiterer Ausgestaltung in vorgesehenen Rollenlagern in einer vorbestimmten Position zu den Führungskörpern angeordnet.

Alternativ können die Führungskörper anstatt Führungsrollen auch Gleitflächen aufweisen, auf denen die Schienen aufliegen. Entsprechende Gleitflächen wären besonders einfach und kostengünstig herzustellen. Insbesondere können auch Führungskörper mit Gleitflächen sowie Führungskörper mit Führungsrollen in einer Vorrichtung miteinander kombiniert sein.

Gemäß einer weiteren Ausführung weisen die Führungskörper zudem Schienenleitelemente auf, die in Längserstreckung der Schienenführung in einer Ebene mit und seitlich zu den Schienen angeordnet sind. Solche Schienenleitelemente begrenzen die Schienenführung seitlich und unterstützen ebenso wie eine Ausgestaltung mit Nut und Feder eine verbesserte Spurhaltung der Schienenführung. Bevorzugt sind diese Schienenleitelemente durch Stahlrollen gebildet, die seitlich zu den Schienen in einer Ebene mit diesen angeordnet sind und eine senkrecht ausgerichtete Rotationsachse aufweisen. Insbesondere sind die Schienenleitelemente drehbar an den Führungskörper befestigt, um bei Kontakt mit den Schienen Reibung zu verringern.

In weiterer Ausgestaltung stellen die Führungskörper auch Fundamente der Vorrichtung dar. Die Führungskörper sind dann entsprechend tief in den Untergrund eingelassen auf dem die Vorrichtung errichtet werden soll, um dieser eine ausreichende Standfestigkeit zu geben. Ob die Führungskörper dann jeder für sich ein einzelnes Fundament ausbilden oder Teil eines größeren Fundaments sind, dass dann mehrere oder insbesondere alle Führungskörper umfasst und in dem oder auf dem Untergrund miteinander verbindet, ist von den jeweiligen Umgebungsbedingungen des Ortes, an dem die Vorrichtung errichtet werden soll abhängig. Von den Umgebungsbedingungen ist weiterhin auch abhängig, wie weit die Führungskörper aus dem Untergrund herausragen, um eine ausnivellierte Auflageebene auszubilden.

Gemäß einer Weiterbildung erstrecken sich die Schienen über die gesamte Länge des Tragrahmens. Der Tragrahmen mit dem darauf aufbauenden Tierhaltebereich kann so über seine gesamte Länge auf den Führungskörper abgestützt sein. Weiter ist dadurch eine sehr gute Lastverteilung auf und Lasteinleitung in die Führungskörper erreicht. Eine besonders einfache und leichte Konstruktion von Schienen und Tragrahmen kann dadurch erreicht werden, dass die Schienen durch wenigstens zwei Doppel-T-Träger gebildet sind, die gleichzeitig einen Teil des Tragrahmens ausbilden. Für die Schienen müssen dann keine weiteren Bauteile vorgesehen werden, die zu einem höheren Gewicht der auf den Führungskörpern lagernden Konstruktion aus Tragrahmen und Tierhaltebereich führen würden.

Auf der dem Tierhaltebereich zugewandten Seite des Tragrahmens ist wenigstens abschnittsweise eine Bodenfläche ausgebildet, die den Tierhaltebereich zum Tragrahmen hin abgegrenzt. Abhängig von der jeweiligen Tierart, für die die Vorrichtung vorgesehen ist, kann die Bodenfläche durch einen geschlossenen Boden, beispielsweise aus Holz, einen Spaltenboden, einen Gitterboden oder dergleichen gefertigt sein. Auch sind je nach Anforderung an den Tierhaltebereich Mischformen verschiedener Böden möglich, die dann zusammen die Bodenfläche ausbilden. Die Bodenfläche erstreckt sich dabei vorteilhafterweise über den gesamten Tierhaltebereich und kann auch einen Wartungsgang, der sich von der restlichen Bodenfläche unterscheidet und begehbar ist aufweisen.
Weiter kann der auf dem Tragrahmen aufbauende Tierhaltebereich vorteilhafterweise zumindest abschnittsweise von Wänden und einem Dach begrenzt sein, wobei Wände und Dach einen zumindest teilweise umbauten Stallraum begrenzen. Insbesondere ist der Stallraum vollständig von der Bodenfläche, den Wänden und dem Dach begrenzt. Je nach Verwendungszweck und Tierart können Abschnitte der Wände jedoch auch aus Drahtgeflecht oder dergleichen bestehen oder vollständig offen sein.

Der umbaute Stallraum umfasst in weiterer Ausgestaltung wenigstens die Wände und das Dach tragende Ständer, die in Längserstreckung der Schienen in gleichen Abständen zueinander angeordnet sind wie die Führungskörper. Die Ständer sind vorteilhafterweise mit dem Tragrahmen verbunden. Durch Dach und Wände bedingte Lasten sind so direkt von dem Tragrahmen und damit auf einfache Weise von den Führungskörpern aufnehmbar. Indem die Ständer gleiche Abstände zueinander aufweisen wie die Führungskörper kann auf einfache Weise jedem Führungskörper ein Ständer zugeordnet sein, insbesondere können alle Ständer auf Führungskörpern angeordnet werden, was eine nochmals verbesserte Lastverteilung bedingt.

Zusätzliche Stabilität des Stallraumes kann durch Aussteifungen erreicht werden. Diese Aussteifungen sind bevorzugt durch zwischen den Ständern oder zwischen auf den Ständern aufliegenden Dachsparren angeordneten Streben gebildet. Insbesondere sind diese Streben zwischen jedem zweiten Ständer oder jeder zweiten Dachsparre angeordnet.

In weiterer Ausgestaltung kann das Dach parallel den Schienen der Schienenführung an wenigstens einer Seite einen über die Bodenfläche hinausragenden Überhang aufweisen. Unterhalb des Überhanges des Daches ist dann auf einfache Weise eine überdachte Weidefläche oder ein überdachter Weideflächenabschnitt geschaffen, der den in der Vorrichtung gehaltenen Tieren einerseits einen Freilauf ermöglicht und andererseits gewissen Schutz vor widrigen Witterungsbedingungen oder Fraßfeinden, wie Raubvögeln, bietet. Je nach Größe des Überhanges, insbesondere auch im Verhältnis zur Größe des gesamten Daches, kann eine zusätzliche Abstützung an dem freien Ende des Überhanges erforderlich sein, die gegebenenfalls eine weitere Schiene mit Führungskörpern notwendig macht.

Bevorzugt ist die überdachte Freilauf- oder Weidefläche unterhalb des Überhangs zu den Seiten geschützt und/ oder zur Umgebung hin abtrennbar. Eine Solche Abtrennung der Freilauffläche erlaubt auch bei verordneter Stallpflicht eine tiergerechte Haltung von Freiland- oder Weidetieren. Um die Freilauffläche unterhalb des Überhangs zur Umgebung abzutrennen, können an dem Überhang, beispielsweise Rollgardinen, Wandelemente oder ein Zaun, befestigt sein. Je nach Anforderung können diese zum Beispiel aus Stoff, Drahtgeflecht, Lochblech oder anderen Material bestehen, solange eine tierundurchlässige Barriere zur Umgebung der Vorrichtung schaffbar ist. Tierundurchlässig heißt dabei vor allem für Tiere gleicher Art oder Gattung undurchlässig, entsprechend gesetzlichen Vorgaben.

Gemäß einer bevorzugten Ausführung kann zudem vorgesehen sein, dass das Dach parallel den Schienen der Schienenführung zu beiden Seiten über die Bodenfläche hinaus einen Überhang aufweist, wobei unterhalb der Überhänge jeweils eine Freilauffläche ausgebildet ist. Die Freilaufflächen sind dann ebenso gestaltet, wie bei einer Vorrichtung mit nur einer Freilauffläche. Der Stallraum wiederum kann entweder einen großen, einzigen Raum umfassen, der Zugänge zu beiden Freilaufflächen aufweist oder der Stallraum kann unterteilt sein, so dass beispielsweise einem ersten Stallraum die Freilauffläche auf einer Seite und einem zweiten Stallraum die Freilauffläche auf der gegenüberliegenden Seite zugeordnet ist. Weitere und andere Unterteilungen des Stallraums und der Freilaufflächen sind natürlich unabhängig vom Aufbau der Vorrichtung möglich. Aufgrund der größeren Breite einer Vorrichtung mit mehr als einer Freilauffläche, weist dieses bevorzugt wenigstens drei Schienen unterhalb des Stallraums auf.

Zudem weist die Vorrichtung vorteilhafterweise eine zu einer Seite geneigte Dachfläche auf, um beispielsweise Niederschlag auf einfache Weise abzuführen. Dieses zu einer Seite geneigte Pultdach eignet sich insbesondere bei Vorrichtungen mit einer einzigen Freilauffläche. Bei Vorrichtungen mit zwei Freilaufflächen an einander gegenüberliegenden Seiten weist die Vorrichtung bevorzugt ein Satteldach auf.

Ein Ausführungsbeispiel der Erfindung, aus dem sich weitere erfindungsgemäße Merkmale ergeben können, ist in der Zeichnung dargestellt. Es zeigen:
- Figur 1:: einen Längsschnitt durch eine erfindungsgemäße Vorrichtung;
- Figur 2:: einen Querschnitt durch die erfindungsgemäße Vorrichtung gemäß Figur 1; und
- Figur 3:: eine Detailansicht eines Führungskörpers.

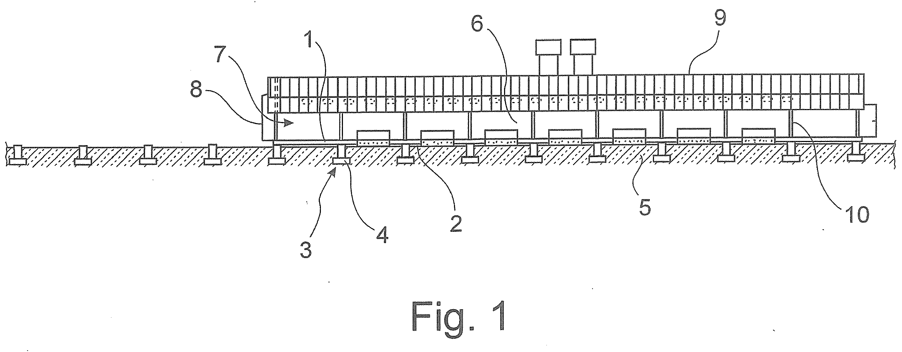

In Figur 1 ist die erfindungsgemäße Vorrichtung dargestellt. Diese weist einen Tragrahmen 1 auf, der mit an dem Tragrahmen 1 ausgebildeten Schienen 2 auf Führungskörpern 3 aufliegt. Die Führungskörper 3 sind in gleichen Abständen in Längsrichtung der Schienen 2 fluchtend zueinander in Reihe angeordnet. Jeder Führungskörper 3 bildet dabei auch ein Fundament 4 der Vorrichtung aus und ist mit dem Fundament 4 in einem Untergrund 5, auf dem die Vorrichtung errichtet ist, eingelassen. Auf dem Tragrahmen 1 ist weiter ein Stallraum 6 aufgebaut, der einen Tierhaltebereich 7 der Vorrichtung definiert. Dieser Stallraum 6 ist durch Wände 8 und ein Dach 9 begrenzt. Sowohl das Dach 9 als auch die Wände 8 sind dabei von Ständern 10 getragen, die auf dem Tragrahmen 1 aufstehend mit diesem verbunden sind. Die Ständer 10 weisen weiter Abstände zueinander auf, die gleich den Abständen sind, die die jeweils benachbarten, fluchtend hintereinander angeordneten Führungskörper 3 zueinander aufweisen. Jedem Ständer 10 ist so einer der Führungskörper 3 zuordbar. Während der Tragrahmen 1 mit den Schienen 2 in seiner Länge dem Stallraum 6 entspricht, weisen die jeweils einer Schiene 2 zugeordneten endseitigen Führungskörper 3 einen Abstand zueinander auf der der anderthalbfachen Länge der Schienen 2 beziehungsweise des Stallraums 6 entspricht, so dass der Tragrahmen 1 mit den Schienen 2 auf den Führungskörpern 3 aufliegt und zwischen den endseitigen Führungskörpern 3 verschiebbar ist.

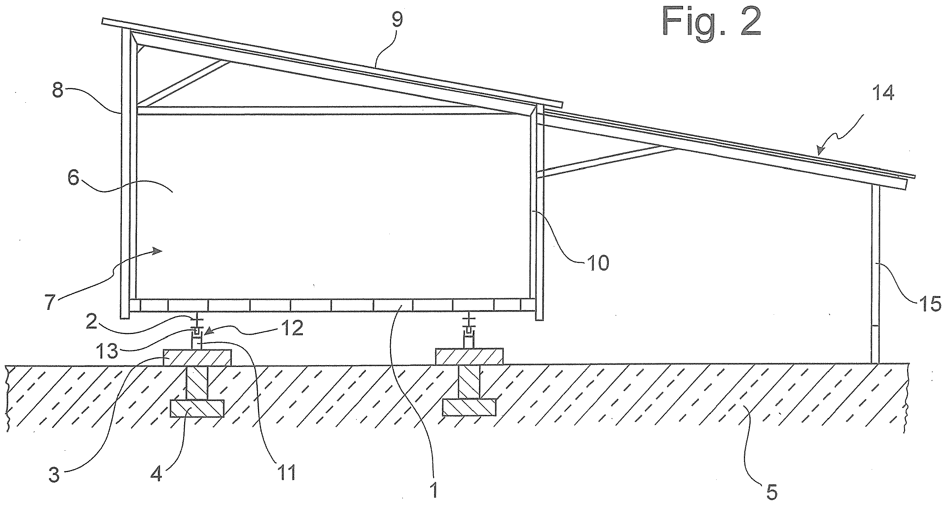

Aus der Figur 2, in der gleiche Teile mit gleichen Bezugszeichen versehen sind, ist weiter zu entnehmen, wie die Schienen 2 auf den Führungskörpern 3 aufliegen. Die Schienen 2 sind jeweils Doppel-T-Träger, die auf Führungsrollen 11 aufliegen. Die Führungsrollen 11 sind dabei in die vorzugsweise aus Beton gefertigten Fundamente 4 der Führungskörper 3 einbetoniert. An den Schienen 2 und den Führungsrollen 11 sind in weiterer Ausgestaltung Nut 12 und Feder 13 ausgebildet, die eine sichere Führung der Schienenführung gewährleisten. Dabei weisen die Führungsrollen 11 eine Nut 12 und die Schienen 2 eine Feder 13 auf. Weiter ist aus Figur 2 zu entnehmen, dass das Dach 9 zu einer Seite des Stallraums 6 einen Überhang 14 aufweist, der an seinem freien Ende eine Abstützung 15 aufweist. Das Dach 9 ist dabei zum Überhang 14 geneigt, um beispielsweise Niederschlag auf einfache Weise abzuführen.

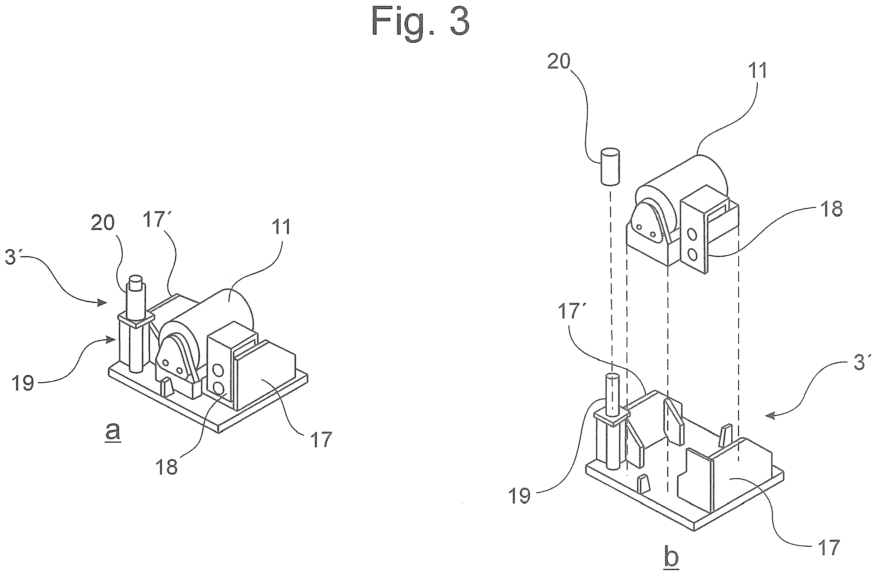

Figur 3 zeigt im Detail den Teil eines Führungskörpers 3' mit einer Führungsrolle 11'. Diese Führungsrolle 11' ist auf einer Grundplatte 16 montierbar und zwischen rechtwinklig zu der Grundplatte 16 angeordneten Winkelblechen 17, 17' positioniert. An dem Winkelblech 17 kann zudem eine Sicherung 18 befestigt werden, die mit einem Ende in den Doppel-T-Träger eingreift und so den Tragrahmen 1 an den Führungskörpern 3 hält. Weiterhin weist der Führungskörper 3' gemäß Figur 3 ein Schienenleitelement 19 auf, das eine verbesserte Spurhaltung der Schienen 2 bewirkt. Das Schienenleitelement 19 ist dabei durch eine Stahlrolle 20 gebildet, die seitlich zu den Schienen 2 in einer Ebene mit diesen angeordnet ist und eine senkrecht ausgerichtete Rotationsachse aufweist.

Um jetzt den Tragrahmen 1 mit dem darauf aufbauenden Stallraum 6 zu versetzen, wird dieser mit den Schienen 2 auf den Führungsrollen 11 gleitend zum jeweils anderen endseitigen Führungskörper 3 in verschoben, wobei aufgrund der auf eine gleiche Höhe ausnivellierten Führungskörper 3 keine Verwindungen des Tragrahmens 1 oder des Stallraums 6 auftreten.
Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Vorrichtung zum Halten von Tieren, insbesondere einen Tierstall zur Haltung von Geflügel, aufweisend einen Tragrahmen (1) und wenigstens einen auf dem Tragrahmen (1) aufbauenden Tierhaltebereich (7),
**dadurch gekennzeichnet,**
**dass** an der von dem Tierhaltebereich (7) abgewandten Seite des Tragrahmens (1) Schienen (2) einer Schienenführung ausgebildet sind,
**dass** jeder Schiene (2) ortsfeste Führungskörper (3) der Schienenführung zugeordnet sind, auf denen die Schienen (2) beweglich gelagert aufliegen, und
**dass** die einer Schiene (2) zugeordneten, ortsfesten Führungskörper (3) in Längserstreckung der jeweiligen Schiene (2) fluchtend hintereinander in vorbestimmten Abständen zueinander auf einem Untergrund (5), auf dem die Vorrichtung zu errichten ist, angeordnet sind, wobei die Führungskörper (3) eine Auflageebene für den Tragrahmen (1) ausbilden.

2. Vorrichtung nach Anspruch 1, **dadurch gekennzeichnet, dass** die jeweils einer Schiene (2) zugeordneten endseitigen Führungskörper (3) einen Abstand zueinander aufweisen, der größer ist als die Länge der Schiene (2).

3. Vorrichtung nach einem der Ansprüche 1 oder 2, **dadurch gekennzeichnet, dass** die Schienen (2) auf Führungsrollen (11) der Führungskörper (3) gelagert sind.

4. Vorrichtung nach Anspruch 3, **dadurch gekennzeichnet, dass** die einer Schiene (2) zugeordneten Führungsrollen (11) eine Nut (12) aufweisen und die jeweilige Schiene (2) eine Feder (13) aufweist, wobei Feder (13) und Nut (12) ineinandergreifen.

5. Vorrichtung nach einem der Ansprüche 1 bis 4, **dadurch gekennzeichnet, dass** die Führungskörper (3) Schienenleitelemente aufweisen, die in Längserstreckung der Schienenführung in einer Ebene mit und seitlich zu den Schienen (2) angeordnet sind.

6. Vorrichtung nach einem der Ansprüche 1 bis 5, **dadurch gekennzeichnet, dass** die Führungskörper (3) Fundamente (4) der Vorrichtung ausbilden.

7. Vorrichtung nach einem der Ansprüche 1 bis 6, **dadurch gekennzeichnet, dass** sich die Schienen (2) über die gesamte Länge des Tragrahmens (1) erstrecken.

8. Vorrichtung nach einem der Ansprüche 1 bis 7, **dadurch gekennzeichnet, dass** die Schienen (2) durch wenigstens zwei Doppel-T-Träger gebildet sind, die gleichzeitig einen Teil des Tragrahmens (1) ausbilden.

9. Vorrichtung nach einem der Ansprüche 1 bis 8 **dadurch gekennzeichnet, dass** auf der dem Tierhaltebereich (7) zugewandten Seite des Tragrahmens (1) wenigstens abschnittsweise eine Bodenfläche ausgebildet ist.

10. Vorrichtung nach einem der Ansprüche 1 bis 9, **dadurch gekennzeichnet, dass** der auf dem Tragrahmen (1) aufbauende Tierhaltebereich (7) zumindest abschnittsweise von Wänden (8) und einem Dach (9) begrenzt ist, wobei Wände (8) und Dach (9) einen Stallraum (6) begrenzen.

11. Vorrichtung nach Anspruch 10, **dadurch gekennzeichnet, dass** der umbaute Stallraum (6) wenigstens die Wände (8) und das Dach (9) tragende Ständer (10) umfasst, die in Längserstreckung der Schienen (2) in gleichen Abständen zueinander angeordnet sind wie die Führungskörper (3).

12. Vorrichtung nach einem der Ansprüche 10 oder 11, **dadurch gekennzeichnet, dass** das Dach (9) parallel den Schienen (2) der Schienenführung an wenigstens einer Seite einen über die Bodenfläche hinausragenden Überhang (14) aufweist.

13. Vorrichtung nach Anspruch 12 **dadurch gekennzeichnet, dass** unterhalb des Überhangs (14) eine Freilauffläche ausgebildet ist.

14. Vorrichtung nach Anspruch 13, **dadurch gekennzeichnet, dass** die Freilauffläche unterhalb des Überhangs zur Umgebung hin abtrennbar, insbesondere tierundurchlässig abtrennbar, ist.

15. Vorrichtung nach einem der Ansprüche 1 bis 14, **dadurch gekennzeichnet, dass** die Vorrichtung eine zu einer Seite geneigte Dachfläche aufweist.

## Claims

1. Device for keeping animals, in particular an animal stall for keeping poultry, including a support frame (1) and at least one animal holding area (7) build on the support frame (1),
**characterized in that**
rails (2) of a rail guide are constructed on the far side of the support frame (1) from the animal holding area (7),
fixed guide bodies (3) of the rail guide are attached to each rail (2) and the rails (2) are supported movably thereon, and
the fixed guide bodies (3) attached to a rail (2) are arranged in alignment and at predetermined distances one behind the other in the longitudinal extension of the respective rail (2) on a base (5), on which the device is to be erected, wherein the guide bodies (3) form a bearing surface for the support frame (1).

2. Device according to Claim 1, **characterized in that** the end faces of each guide body (3) attached to a rail (2) are farther from each other than the length of the rail (2).

3. Device according to one of Claims 1 or 2, **characterized in that** the rails (2) are mounted on guide rollers (11) of the guide bodies (3).

4. Device according to Claim 3, **characterized in that** the guide rollers (11) attached to a rail (2) have a groove (12), and the respective rail (2) has a tongue (13), and the tongue (13) and groove (12) fit into each other.

5. Device according to any one of Claims 1 to 4, **characterized in that** the guide bodies (3) have rail guide elements which are arranged in one plane in the longitudinal extension of the rail guide and on the side of the rails (2).

6. Device according to any one of Claims 1 to 5, **characterized in that** the guide bodies (3) form foundations (4) for the device.

7. Device according to any one of Claims 1 to 6, **characterized in that** the rails (2) extend over the entire length of the support frame (1).

8. Device according to any one of Claims 1 to 7, **characterized in that** the rails (2) are formed by at least two double-T-girders, which at the same time form a part of the support frame (1).

9. Device according to any one of Claims 1 to 8, **characterized in that** a floor area is formed at least in parts on the side of the support frame (1) facing the animal holding area (7).

10. Device according to any one of Claims 1 to 9, **characterized in that** the animal holding area (7) supported at least in parts on the supporting frame (1) is delimited at least partially by walls (8) and a roof (9), wherein walls (8) and roof (9) delimit a stall space (6).

11. Device according to Claim 10, **characterized in that** the enclosed stall space (6) comprises upright posts (10) which support at least the walls (8) and the roof (9) and are arranged at the same distances from each other in the longitudinal extension of the rails (2) as the guide bodies (3).

12. Device according to Claim 10 or 11, **characterized in that** the roof (9) has an overhang (14) which projects beyond the floor area parallel to the rails (2) of the rail guide on at least one side.

13. Device according to Claim 12, **characterized in that** a free range area is designed below the overhang (14).

14. Device according to Claim 13, **characterized in that** the free range area beneath the overhang can be isolated from the surrounding environment, in particular it can be isolated impenetrably for animals.

15. Device according to any one of Claims 1 to 14, **characterized in that** the apparatus has a roof area which is inclined to one side.

## Revendications

1. Dispositif, destiné à garder des animaux, notamment un bâtiment de stabulation destiné à l'élevage de volailles, comportant un cadre porteur (1) et au moins une zone d'élevage d'animaux (7) construite sur le cadre porteur (1),
**caractérisé**
**en ce que** sur le côté du cadre porteur (1) qui est opposé à la zone d'élevage d'animaux (7) sont conçues des glissières (2) d'un guidage par glissières,
**en ce qu'**à chaque glissière (2) sont associés des organes de guidage (3) stationnaires du guidage par glissières sur lesquels les glissières (2) reposent en étant logées de manière mobile, et
**en ce que** dans l'extension longitudinale de la glissière (2) concernée, les organes de guidage (3) stationnaires associés à une glissière (2) sont placés en alignement les uns derrière les autres avec des écarts mutuels prédéfinis sur un support (5), sur lequel doit être érigé le dispositif, les organes de guidage (3) formant un plan d'appui pour le cadre porteur (1).

2. Dispositif selon la revendication 1, **caractérisé en ce que** les organes de guidage (3) du côté extrême respectivement associés à une glissière (2) présentent les uns par rapport aux autres un écart qui est supérieur à la longueur de la glissière (2).

3. Dispositif selon l'une quelconque des revendications 1 ou 2, **caractérisé en ce que** les glissières (2) sont logées sur des galets de guidage (11) des organes de guidage (3).

4. Dispositif selon la revendication 3, **caractérisé en ce que** les galets de guidage (11) associés à une glissière (2) comportent une rainure (12) et la glissière (2) concernée comporte une clavette (13), la clavette (13) et la rainure (12) s'engageant l'une dans l'autre.

5. Dispositif selon l'une quelconque des revendications 1 à 4, **caractérisé en ce que** les organes de guidage (3) comportent des éléments guide-glissière, qui dans l'extension longitudinale du guidage par glissières sont placés dans un plan avec les glissières (2) et latéralement de celles-ci.

6. Dispositif selon l'une quelconque des revendications 1 à 5, **caractérisé en ce que** les organes de guidage (3) forment des fondations (4) du dispositif.

7. Dispositif selon l'une quelconque des revendications 1 à 6, **caractérisé en ce que** les glissières (2) s'étendent sur toute la longueur du cadre porteur (1).

8. Dispositif selon l'une quelconque des revendications 1 à 7, **caractérisé en ce que** les glissières (2) sont constituées d'au moins deux supports en double T qui forment simultanément une partie du cadre porteur (1).

9. Dispositif selon l'une quelconque des revendications 1 à 8, **caractérisé en ce que** sur le côté du cadre porteur (1) qui fait face à la zone d'élevage d'animaux (7) est conçue au moins par segments une surface de plancher.

10. Dispositif selon l'une quelconque des revendications 1 à 9, **caractérisé en ce que** la zone d'élevage d'animaux (7) construite sur le cadre porteur (1) est délimitée au moins par segments par des parois (8) et par un toit (9), les parois (8) et le toit (9) délimitant un local de stabulation (6).

11. Dispositif selon la revendication 10, **caractérisé en ce que** le local de stabulation (6) réaménagé comprend au moins les supports (10) portant les parois (8) et le toit (9), qui dans l'extension longitudinale des glissières (2) sont placés avec des écarts mutuels les uns des autres qui sont identiques à ceux des organes de guidage (3).

12. Dispositif selon l'une quelconque des revendications 10 ou 11, **caractérisé en ce qu'**à la parallèle des glissières (2) du guidage par glissières, sur au moins un côté, le toit (9) comporte un surplomb (14) saillant au-delà de la surface de plancher.

13. Dispositif selon la revendication 12, **caractérisé en ce que** sous le surplomb (14) est conçue une surface de circulation libre.

14. Dispositif selon la revendication 13, **caractérisé en ce que** la surface de circulation libre en-dessous du surplomb est séparable par rapport à l'environnement, notamment séparable en empêchant le passage d'animaux.

15. Dispositif selon l'une quelconque des revendications 1 à 14, **caractérisé en ce que** le dispositif comporte une surface de toit inclinée vers un côté.
